# EUROPÄISCHE PATENTSCHRIFT

(11) **EP 1 222 098 B1**
(45) Veröffentlichungstag und Bekanntmachung des Hinweises auf die Patenterteilung: **29.08.2007**
(21) Anmeldenummer: 00967900.2
(22) Anmeldetag: 20.10.2000
(51) Int. Cl.: B60T 7/04, B60T 11/20

(54) **BETÄTIGUNGSEINHEIT FÜR EINE ELEKTRONISCH GESTEUERTE FAHRZEUGBREMSANLAGE**
ACTUATOR SYSTEM FOR AN ELECTRONICALLY CONTROLLED AUTOMOTIVE BRAKING SYSTEM
UNITE D'ACTIONNEMENT POUR SYSTEME DE FREINAGE D'AUTOMOBILE A COMMANDE ELECTRONIQUE

(30) Priorität: 21.10.1999 DE 19950862
(43) Veröffentlichungstag der Anmeldung: 17.07.2002
(73) Patentinhaber: Lucas Varity GmbH, 56070 Koblenz (DE)
(72) Erfinder: SCHAUST, Karlheinz, 56133 Fachbach (DE); MÜLLER, Jens, Hauke, 56294 Kalt (DE)
(74) Vertreter: Schmidt, Steffen J.
(86) Internationale Anmeldenummer: PCT/EP2000/010358
(87) Internationale Veröffentlichungsnummer: WO 2001/028830

(56) Entgegenhaltungen:
- DE-A- 3 124 755
- DE-C- 19 638 102
- US-A- 5 887 432

## Beschreibung

### Hintergrund der Erfindung

Die Erfindung betrifft eine Betätigungseinheit für eine elektronisch gesteuerte hydraulische Fahrzeugbremsanlage, mit einem durch ein Bremspedal betätigbaren Hauptbremszylinder und einem Reservoir für Hydraulikfluid.

Diese Betätigungseinheit ist eine sog. elektro-hydraulische Bremseinheit, bei der der auf das Bremspedal eingeleitete Bremswunsch des Fahrers im Normalbetrieb lediglich einer Einrichtung zur Simulation des Bremspedalverhaltens zugeführt wird, während die tatsächliche Beaufschlagung der Fahrzeugbremsen mit unter Druck stehendem Hydraulikfluid durch eine elektronisch angesteuerte Pumpe erfolgt, die den Hydraulikdruck in den Radbremsen aufbaut, hält und/oder abbaut.

Das durch die Pumpe geförderte Hydraulikfluid wird von einem Ansteuersignal bestimmt, das durch einen mit dem Bremspedal direkt oder indirekt gekoppelten Sensor erzeugt wird.

Im Notbetrieb wird das von dem durch das Bremspedal betätigbaren Hauptbremszylinder verdrängte Hydraulikfluid über eine dann hergestellte Verbindung direkt in die Fahrzeugbremsen eingespeist. Eine derartige Fahrzeugbremsanlage wird auch als "push-through"-fähige "Brake-by-Wire"-Fahrzeugbremsanlage bezeichnet.

### Stand der Technik

Die in der DE 31 24 755 A1 beschriebene Bremsanlage weist einen ersten Bremskreisabschnitt und einen zweiten Bremskreisabschnitt auf. Der erste Bremskreisabschnitt umfaßt einen Hauptzylinder, einen Wegsimulator zur Simulation des Bremsverhaltens und eine erste Druckmeßeinrichtung. Der zweite Bremskreisabschnitt umfaßt einen Radbremszylinder und eine zweite Druckmeßeinrichtung. Die beiden Bremskreisabschnitte sind durch ein bzw. zwei Mehrstellungsventile verbindbar und trennbar.

Das Mehrstellungsventil wird sowohl für die Funktion der Bremskraftverstärkung als auch für den Blockierschutz genutzt.

Bei intakter Einrichtung dient der Hauptzylinderdruck nur als Steuerdruck, der Druck am Radzylinder wird als Servodruck eingespeist Im Falle eines Ausfalls der Servodruckversorgung werden der erste und zweite Bremskreisabschnitt durch das Mehrstellungsventil verbunden, so daß beim Betätigen des Bremspedals Bremsfluid in den Radbremszylinder strömt. In diesem Moment ist die Funktion der Brake-by-Wire Bremsanlage nicht mehr gegeben.

Aus der gattungsgemäßen DE 196 38 102 C1 ist eine Fahrzeugbremsanlage bekannt, bei der eine Betätigungseinheit für ein elektronisch gesteuertes Bremssystem einen Hauptbremszylinder umfaßt, der über ein Bremspedal betätigbar ist. Von dem Hauptbremszylinder gehen zwei Bremskreise aus, um Radbremsen mit Hydraulikfluid aus einem Reservoir zu versorgen. Zwischen dem Hauptbremszylinder und jedem Bremskreis der Radbremsen ist eine erste Ventileinrichtung angeordnet, die die Verbindung zwischen dem Hauptbremszylinder und jedem Bremskreis der Radbremsen federunterstützt öffnet (Grundstellung) und elektromagnetbetätigt sperrt (Betätigungsstellung).

Bei fehlerfreiem Bremssystem nimmt die erste Ventileinrichtung ihre Betätigungsstellung ein, so daß die Versorgung der Radbremse mit Hydraulikfluid durch eine elektronisch gesteuerte Druckquelle erfolgt. Tritt dagegen in dem elektronisch gesteuerten System ein Fehler auf, so geht die erste Ventilanordnung in ihre Grundstellung zurück, damit eine Notbetätigung der Radbremse aus dem Hauptbremszylinder durchführbar ist.

Parallel zu der ersten Ventilanordnung und der Radbremse ist der Ausgang des Hauptbremszylinders an eine Simulationseinrichtung angeschlossen. Die Simulationseinrichtung dient dazu, wenn sich die erste Ventileinrichtung in ihrer Betätigungsstellung befindet, also die Versorgung der Radbremse mit Hydraulikfluid (ausschließlich) durch die elektronisch gesteuerte Druckquelle erfolgt, dem Fahrer bei Betätigung des Bremspedals eine bei einer konventionellen Bremsanlage übliche Pedalcharakteristik zu vermitteln.

In der Verbindung zwischen dem Ausgang des Hauptbremszylinders und der Simulationseinrichtung ist eine zweite Ventileinrichtung angeordnet, die die Verbindung zwischen dem Hauptbremszylinder und der Simulationseinrichtung federunterstützt sperrt und elektromagnetbetätigt öffnet. Damit ist es möglich, während der Durchführung einer Notbetätigung der Radbremse die Verbindung des Hauptbremszylinders zu der Simulationseinrichtung zu sperren, so daß während einer Notbetätigung der Radbremse kein Hydraulikfluidvolumen in die Simulationseinrichtung entweichen kann. Die zweite Ventilanordnung geht dann in ihre Grundstellung über, wenn auch die erste Ventileinrichtung in ihre Grundstellung schaltet (oder geschaltet hat), also ein Fehler (zum Beispiel Spannungsrückgang) in dem elektronisch gesteuerten System aufgetreten ist.

Diese bekannte Anordnung erfordert entweder eine kombinierte Ventilanordnung aus der ersten und der zweiten Ventileinrichtung, oder zwei separat anzusteuernde erste und zweite Ventileinrichtungen. Diese Anordnung ist sehr aufwendig im Gesamtaufbau. Insbesondere wegen der Wettbewerbssituation und des hohen Kostendrucks, den die Automobilhersteller auf ihre Zulieferer ausüben, besteht ein permanenter Zwang zur Vereinfachung bei gleichbleibender wenn nicht sogar steigender Qualität und Sicherheit.

### Der Erfindung zugrundeliegende Aufgabe

Der Erfindung liegt daher die Aufgabe zugrunde, eine Fahrzeugbremsanlage der oben genannten Art bereitzustellen, die einen einfacheren Aufbau bei gleichen Leistungsmerkmalen bietet.

### Erfindungsgemäße Lösung

Zur Lösung der Aufgabe wird erfindungsgemäß eine Betätigungseinheit für eine elektronisch gesteuerte hydraulische Fahrzeugbremsanlage bereitgestellt, mit einem Hauptbremszylinder, in dem ein durch ein Betätigungsglied verschiebbarer erster Kolben angeordnet ist, einem ersten Bremskreis, der durch eine Ventilanordnung in einer Grundstellung mit dem Hauptbremszylinder verbindbar oder in einer Betätigungsstellung von diesem trennbar ist, und einer mit einer Hydraulikkammer des Hauptbremszylinders verbindbaren Einrichtung zur Simulation des Bremspedalverhaltens, wobei in dem Hauptbremszylinder ein zweiter Kolben verschiebbar angeordnet ist und ein Verschieben eines Kolbens ein Verschieben des anderen Kolbens verursacht, wobei durch das Verschieben die Einrichtung zur Simulation des Bremspedalverhaltens wirksam oder unwirksam geschaltet wird.

Vorteile und weitere Ausgestaltungen der Erfindung Diese Anordnung hat den Vorteil, ohne die elektrisch betätigte Ventileinrichtung zwischen dem Hauptbremszylinder und der Simulationseinheit auszukommen. Da die bekannte Ventileinrichtung sich aus Sicherheitsgründen in Normalbetrieb der Fahrzeugbremsanlage in ihrer Betätigungsstellung befindet, hat dies einen permanenten Stromverbrauch mit der entsprechenden Erwärmung zur Folge. Außerdem ist erfindungsgemäß der strukturell sonst aufwendige Aufbau der Fahrzeugbremsanlage vereinfacht, da eine Ventileinrichtung als separates Teil eingespart ist. Zudem wird durch die Erfindung eine Vorgehensweise gelehrt, die ohne elektrische Ansteuerung einer solchen elektromagnetischen Ventilanordnung auskommt.

In einer bevorzugten Ausführungsform begrenzen die beiden Kolben miteinander und mit der Wand des Hauptbremszylinders jeweils eine erste und eine zweite Hydraulikkammer, wobei in diesen Hydraulikkammern Hydraulikfluid aufgenommen ist.

Weiterhin weist der zweite Kolben einen von einer der Hydraulikkammern zu einem seitlichen Auslaß führenden Kanal auf, wobei der zu der Einrichtung zur Simulation des Bremspedalverhaltens führende Fluidanschluß so angeordnet ist, daß er in Abhängigkeit von der Stellung des zweiten Kolbens mit dem Auslaß des Kanals fluchtet, wenn der Bremskreis durch die erste Ventilanordnung von dem Hauptbremszylinder getrennt ist.

Dabei hat die Einrichtung zur Simulation des Bremspedalverhaltens eine zur Wirkung gegen den Hydraulikdruck aus dem Hauptbremszylinder eingerichtete Federanordnung. Außerdem ist ihr wirkungsmäßig eine Charakteristik-Modelliereinrichtung zugeordnet.

In einer ersten Ausführungsform der Erfindung ist die Charakteristik-Modelliereinrichtung in der Verbindung zwischen dem Hauptbremszylinder und der Einrichtung zur Simulation des Bremspedalverhaltens angeordnet.

In einer zweiten, wesentlich kompakter bauenden Ausführungsform der Erfindung ist die Charakteristik-Modelliereinrichtung in einem der Kolben in dem Hauptbremszylinder, vorzugsweise im Strömungsweg zwischen einer der Hydraulikkammern und dem seitlichen Auslaß des zweiten Kolbens angeordnet.

Schließlich kann die Charakteristik-Modelliereinrichtung auch in der Verbindung zwischen der Einrichtung zur Simulation des Bremspedalverhaltens und einem Hydraulikreservoir angeordnet sein.

Die Einrichtung zur Simulation des Bremspedalverhaltens ist durch eine Zylinder/Kolbenanordnung gebildet, bei der ein Kolben durch eine Federanordnung belastet ist.

In einer Normalbetriebsart (Aktiv) der Anordnung mit sich in der (geschlossenen) Betätigungsstellung befindender Ventilanordnung zwischen Hauptbremszylinder und Bremskreis kann kein Hydraulikfluid vom Hauptbremszylinder in den (ersten) Bremskreis strömen. Wird in dieser Situation der erste Kolben betätigt, wird der die Einrichtung zur Simulation des Bremspedalverhaltens wirksam oder unwirksam schaltende Kolben (in der Regel der zweite) in eine Stellung geschoben, in der diese Einrichtung wirksam geschaltet ist. Sobald die Wirksamschaltung erfolgt ist, wird das in der ersten Hydraulikkammer befindliche Hydraulikfluid durch den Kanal in dem zweiten Kolben in die Einrichtung zur Simulation des Bremspedalverhaltens gedrängt.

In einer Notbetriebsart (Passiv) der Anordnung mit sich in der (offenen) Grundstellung befindender Ventilanordnung zwischen Hauptbremszylinder und Bremskreis kann Hydraulikfluid in den (ersten) Bremskreis strömen. Wird in dieser Situation der erste Kolben betätigt, wird der die Einrichtung zur Simulation des Bremspedalverhaltens wirksam oder unwirksam schaltende Kolben (in der Regel der zweite) durch eine Federanordnung oder dergl. in eine Stellung geschoben, in der diese Einrichtung unwirksam geschaltet ist.

Somit drängt dann der erste Kolben bei einer Betätigung das in der ersten Hydraulikkammer befindliche Hydraulikfluid in den ersten Bremskreis und gleichzeitig verschiebt der erste Kolben den zweiten Kolben, so daß sich auch die zweite Hydraulikkammer verkleinert und sich darin befindliches Hydraulikfluid in den zweiten Bremskreis gedrängt wird.

Weitere Vorteile, Merkmale und Eigenschaften der Erfindung ergeben sich aus der nachfolgenden Beschreibung derzeit bevorzugter Ausführungsformen der Erfindung unter Bezugnahme auf die Zeichnung.

### Kurzbeschreibung der Zeichnung

Fig. 1 zeigt eine erste Ausführungsform einer erfindungsgemä-ßen Betätigungseinheit für eine elektronisch gesteuerte Fahrzeugbremsanlage in einer schematischen Darstellung.

Fig. 1a zeigt eine Teilansicht der ersten Ausführungsform der Betätigungseinheit nach Fig. 1 in einer Passiven Betriebsart.

Fig. 1b zeigt eine Teilansicht der ersten Ausführungsform der Betätigungseinheit nach Fig. 1 in einer Aktiven Betriebsart.

Fig. 2 zeigt eine erste Abwandlung der der Einrichtung zur Simulation des Bremspedalverhaltens aus Fig. 1 zugeordneten Charakteristik-Modelliereinrichtung.

Fig. 3 zeigt eine zweite Abwandlung der der Einrichtung zur Simulation des Bremspedalverhaltens aus Fig. 1 zugeordneten Charakteristik-Modelliereinrichtung.

Fig. 4 zeigt eine zweite Ausführungsform einer erfindungsgemä-ßen Betätigungseinheit für eine elektronisch gesteuerte Fahrzeugbremsanlage mit einer integrierten Einrichtung zur Simulation des Bremspedalverhaltens in einer schematischen Darstellung.

Fig. 5 zeigt eine dritte Ausführungsform einer erfindungsgemä-ßen Betätigungseinheit für eine elektronisch gesteuerte Fahrzeugbremsanlage mit einer integrierten Einrichtung zur Simulation des Bremspedalverhaltens in einer schematischen Darstellung.

### Beschreibung derzeit bevorzugter Ausführungsformen

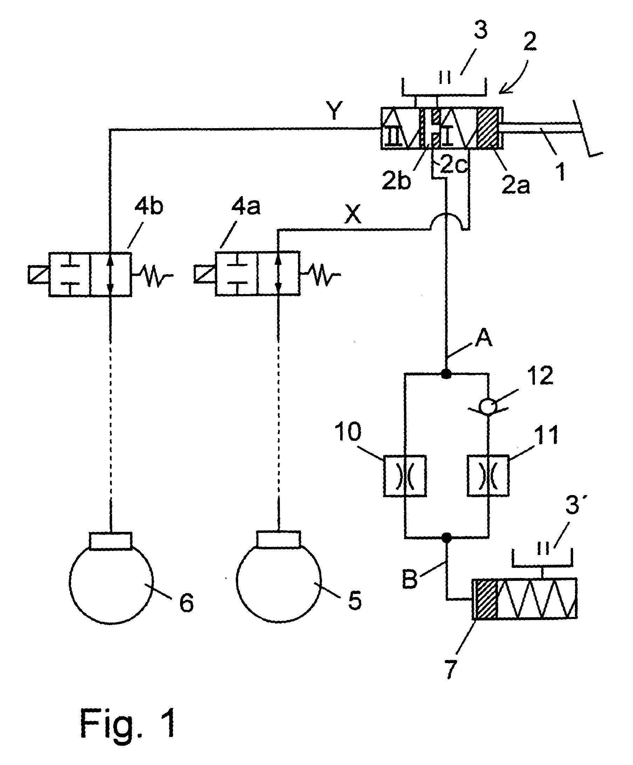

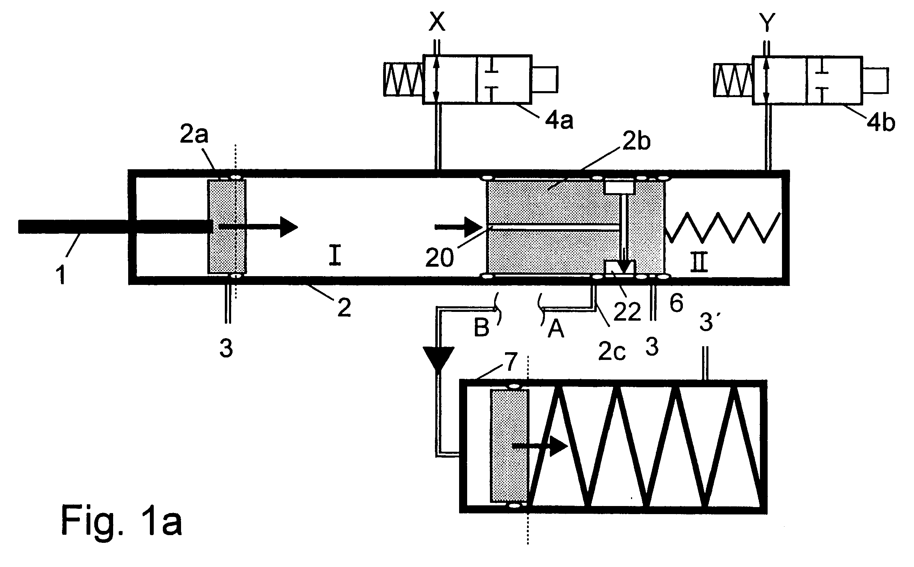

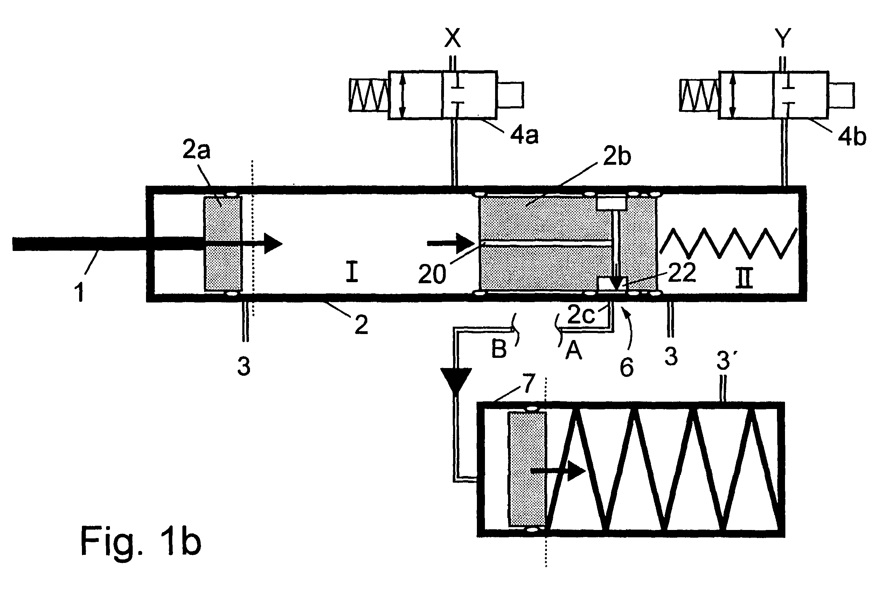

In Fig. 1 ist eine erfindungsgemäße Betätigungseinheit für ein elektronisch gesteuertes Bremssystem schematisch dargestellt. Die Betätigungseinheit umfaßt einen Hauptbremszylinder 2, der über ein Betätigungsglied in Form eines Bremspedals mit einer Betätigungsstange 1 betätigbar ist. In dem Hauptbremszylinder 2 ist ein erster Kolben 2a angeordnet, der mit der Betätigungsstange 1 direkt und starr verbunden ist. Außerdem ist in dem Hauptbremszylinder 2 ein zweiter Kolben 2b angeordnet. Die beiden Kolben 2a, 2b begrenzen miteinander bzw. mit der Wand des Hauptbremszylinders 2 jeweils eine erste und eine zweite Hydraulikkammer I, II, wobei in diesen Hydraulikkammern Hydraulikfluid aufgenommen ist. Dieses Hydraulikfluid kann aus einem Reservoir 3 über jeweilige Versorgungsanschlüsse 3a 3b in die erste bzw. zweite Hydraulikkammer I, II zu- oder abfließen.

Von der ersten bzw. zweiten Hydraulikkammer I, II geht ein Bremskreis X bzw. Y aus, um jeweils Radbremsen 5a, 5b mit Hydraulikfluid zu versorgen. Zwischen dem Hauptbremszylinder 1 und der jeweiligen Radbremse 5, 6 ist eine erste Ventileinrichtung 4a bzw. 4b angeordnet, die die Verbindung zwischen dem Hauptbremszylinder 2 und der jeweiligen Radbremse 5, 6 federunterstützt öffnet (Grundstellung) und elektromagnetbetätigt sperrt (Betätigungsstellung).

In der Aktiven Betriebsart, das heißt bei fehlerfreiem System nimmt die erste Ventileinrichtung 4 ihre Betätigungsstellung ein, so daß die Versorgung der Radbremse 5 mit Hydraulikfluid durch eine nicht näher dargestellte elektronisch gesteuerte Druckquelle erfolgt. Tritt dagegen in dem elektronisch gesteuerten System ein Fehler, beispielsweise durch eine zu geringe Versorgungsspannung, auf, so geht die erste Ventilanordnung 4 in ihre Grundstellung zurück, damit eine Notbetätigung der Radbremse 5 durchführbar ist (Passive Betriebsart).

In einer (durch eine weiter unten im Detail beschriebenen Ventilanordnung zwischen Wirksam und Unwirksam) umschaltbaren Verbindung zu der ersten Hydraulikkammer I ist ein Ausgang 2c des Hauptbremszylinders 2 an eine Simulationseinrichtung 7 angeschlossen. Die Simulationseinrichtung 7 dient dazu, wenn sich die erste Ventileinrichtung 4 in ihrer Betätigungsstellung befindet, also die Versorgung der Radbremse 5 mit Hydraulikfluid durch die nicht näher dargestellte elektronisch gesteuerte Druckquelle erfolgt, dem Fahrer bei Betätigung des Bremspedals 1 die bei einer konventionellen Bremsanlage übliche Pedalcharakteristik zu vermitteln.

In das Innere des Hauptbremszylinders 2 ist im Strömungsweg zwischen der ersten Hydraulikkammer I und der Simulationseinrichtung 7 eine zweite Ventileinrichtung 6 angeordnet, die die Verbindung zwischen der ersten Hydraulikkammer I des Hauptbremszylinder 2 und der Simulationseinrichtung 7 sperrt (Grundstellung) und öffnet (Betätigungsstellung). Damit ist es möglich, während der Durchführung einer Notbetätigung der Radbremse 5 die Verbindung des Hauptbremszylinders 2 zu der Simulationseinrichtung 7 zu sperren, so daß kein Hydraulikfluidvolumen in die Simulationseinrichtung 7 entweichen kann.

Die zweite Ventilanordnung 6 ist durch den zweiten Kolben 2b im Zusammenwirken mit dem Ausgang 2c des Hauptbremszylinders 2 zu der Simulationseinrichtung 7 gebildet. Dazu führt in dem zweiten Kolben 2b von dessen einer, der ersten Hydraulikkammer I zugewandten Stirnfläche ein Kanal 20 zu einem seitlichen Auslaß 22. Der Fluidanschluß 2c zu der Einrichtung zur Simulation des Bremspedalverhaltens 7 ist an einer solchen Position der Wand des Hauptbremszylinders 2 angeordnet, daß er in Abhängigkeit von der Stellung des zweiten Kolbens 2b mit dem Auslaß 22 des Kanals 20 fluchtet, wenn der Bremskreis X durch die erste Ventilanordnung 4 von dem Hauptbremszylinder 2 getrennt ist und eine Betätigung des ersten Kolbens 2a zu einer Verschiebung des Kolbens 2b geführt hat (siehe auch Fig. 1a).

In entsprechender Weise ist bei sich in ihren Betätigungsstellungen befindenden ersten Ventilanordnungen 4a, 4b ein Verdrängen von Hydraulikfluid aus den beiden Hydraulikkammern I, II in die jeweiligen Bremskreise dann möglich, wenn die beiden Kolben 2a, 2b die Anschlüsse zu dem Reservoir 3 jeweils mit ihrer Vorderkante "überfahren" haben (so daß keine Verbindung zwischen den Hydraulikkammern I, II und dem Reservoir 3 mehr besteht), während gleichzeitig der zweite Kolben 2b durch das unter Druck stehende Hydraulikfluid soweit verschoben wird, daß der Auslaß 22 nicht mehr mit dem Anschluß 2c des Hauptbremszylinders 2 fluchtet (siehe Fig. 1b).

Um sicherzustellen, daß in der Aktiven Betriebsart eine Verbindung zu der Simulationseinrichtung 7, besteht ist der Kanal 20 und auch dessen Auslaß 22, und der Anschluß 2c des Hauptbremszylinders 2 bzw. die anschließende Verbindung zu der Simulationseinrichtung 7 entsprechend zu dimensionieren. In der Passiven Betriebsart kann der Kolben 2b den gesamten ihm zur Verfügung stehenden Weg verschoben werden. Sobald der zweite Kolben 2b sich weiter bewegt als der ersten Kolben 2a, ist durch die entsprechende Dimensionierung des Kanals 20, und auch dessen Auslaß 22, und des Anschlusses 2c des Hauptbremszylinders 2 bzw. der anschließenden Verbindung zu der Simulationseinrichtung 7 sichergestellt, daß die Verbindung zu der Simulationseinrichtung 7 unterbrochen wird, so daß für den (Not-)Bremsvorgang erforderliches Hydraulikfluid nicht in die Simulationseinrichtung 7 gedrängt wird und damit für den Bremsvorgang nicht mehr zur Verfügung stünde.

Die Simulationseinrichtung 7 hat einen Kolben 7a, der einen Zylinder in zwei Druckräume 7', 7" unterteilt. Der eine Druckraum 7" ist mit dem Reservoir 3' für Hydraulikfluid verbunden. Dieses Reservoir 3' kann mit dem Reservoir 3 des Hauptbremszylinders 2 identisch oder mit ihm hydraulisch verbunden sein. Der andere Druckraum 7' ist über eine Charakteristik-Modelliereinrichtung zwischen den Punkten A und B sowie die (in ihrer Durchlaßstellung befindliche) zweite Ventilanordnung 6 mit dem Hauptbremszylinder 2 verbunden, um den Kolben 7a gegen die Wirkung eines Federelements 7b mit Druck zu beaufschlagen. Vorzugsweise weist das Federelement 7b eine progressive Federkennlinie auf, um die Pedalcharakteristik möglichst genau zu simulieren.

Das Federelement 7b kann in herkömmlicher Weise als Schraubenfeder oder als Tellerfederpaket ausgebildet werden. Jedoch ist es auch möglich, das Federelement 7b als Elastomer-Element auszubilden, wodurch sich nicht unerhebliche Kostenvorteile ergeben, da anders als bei Verwendung einer Schraubenfeder Befestigungs- sowie Anschlagteile direkt in das Elastomer-Element integriert werden können. Auch wird der bei der Verwendung einer Schraubenfeder erforderliche Aufwand zur Führung sowie Einstellung der Vorspannkraft der Schraubenfeder eingespart. Vorteilhaft erweist sich weiterhin, daß ein Elastomer-Element gegenüber einer Schraubenfeder stärker ausgeprägte Dämpfungseigenschaften aufweist. Die vorteilhaften Eigenschaften des Elastomer-Elements lassen sich durch geeignete Formgebung, Kapselung sowie Materialauswahl erzielen.

Um die Simulation der Pedalcharakteristik durch hydraulische Dämpfung zu optimieren, sind in der Verbindung zwischen dem Hauptbremszylinder 2 und der Simulationseinrichtung 7 eine erste und eine zweite Drossel 10, 11 angeordnet. Die Drosseln 10, 11 sind zwischen den Punkten A, B angeordnet und zueinander parallel geschaltet, wobei zu der zweiten Drossel 11 ein Sperrventil 12 in Reihe geschaltet ist. Das Sperrventil 12 ist so ausgerichtet, daß eine Strömungsverbindung nur in Richtung von der Simulationseinrichtung 7 zu dem Hauptbremszylinder 2 möglich ist. Demzufolge strömt bei einer Betätigung des Bremspedals 1 Hydraulikfluid von dem Hauptbremszylinder 2 über die erste Drossel 10 in die Simulationseinrichtung 7, während bei einer Zurücknahme der Betätigung des Bremspedals 1 Hydraulikfluid von der Simulationseinrichtung 7 über beide Drosseln 10, 11 in den Hauptbremszylinder 2 zurückströmt.

Erfindungsgemäß stellt sich damit bei Betätigung des Bremspedals 1 und bei Zurücknahme der Betätigung des Bremspedals 1 jeweils eine unterschiedliche Dämpfungs- und damit Pedalcharakteristik ein.

Die Drosseln 10, 11 sind so bemessen oder einstellbar, daß sich bei Betätigung des Bremspedals 1 eine stärker gedämpfte Pedalcharakteristik als bei Zurücknahme der Betätigung des Bremspedals 1 ergibt. Die Bemessung der Drosseln 10, 11 kann in üblicher weise durch Einstellung der Strömungsquerschnitte erfolgen. Damit sich bei Betätigung eine stärkere Bedämpfung als bei Zurücknahme der Betätigung des Bremspedals 1 ergibt, sind entweder die Strömungsquerschnitte der Drosseln 10, 11 jeweils gleich groß oder der Strömungsquerschnitt der mit dem Sperrventil 12 in Reihe geschalteten zweiten Drossel 11 ist größer als der Strömungsquerschnitt der ersten Drossel 10 einzustellen.

Sofern bereits das Federelement 7b der Simulationseinrichtung 7 eine ausreichende Bedämpfung bewirkt, was insbesondere bei der Verwendung von einem Elastomer-Element als Federelement 7b der Fall ist, kann das mit dem Sperrventil 12 in Reihe geschaltete Drosselventil 11 eingespart werden.

Das Unterbrechen der Verbindung zwischen den Hydraulikkammern I, II und dem Reservoir erfolgt in den gezeigten Ausführungsformen nach dem "Schnüffelloch"-Prinzip, wobei für einen Fachmann ohne weiteres erkennbar ist, wie statt dessen eine "Zentralventil"-Anordnung einsetzbar ist, da die vorliegende Erfindung hiervon unabhängig ist.

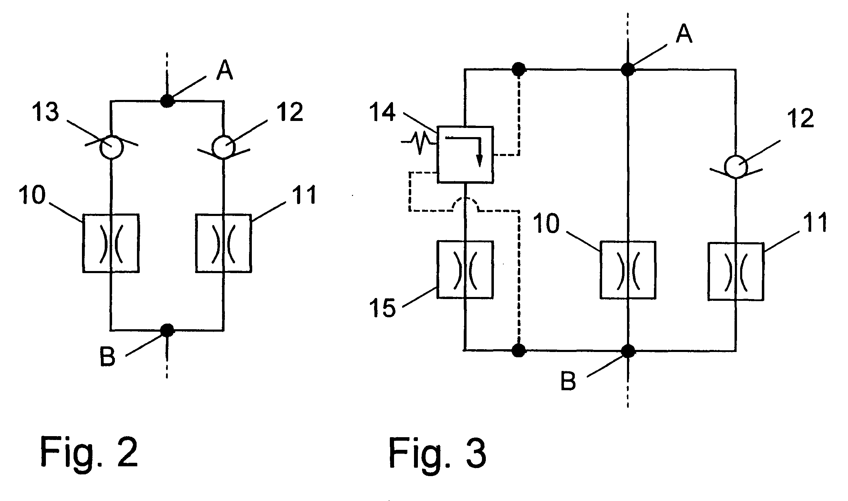

Bei der Ausführungsform nach Fig. 2 ist gegenüber der Ausführungsform nach Fig. 1 zusätzlich auch der ersten Drossel 10 ein Sperrventil 13 in Reihe geschaltet, wobei das Sperrventil 13 so ausgerichtet ist, daß eine Strömungsverbindung nur in Richtung von dem Hauptbremszylinder 2 zu dem Druckraum 7' der Simulationseinrichtung 7 möglich ist. Demzufolge strömt bei einer Betätigung des Bremspedals 1 Hydraulikfluid von dem Hauptbremszylinder 2 über die erste Drossel 10 in die Simulationseinrichtung 7. Bei einer Zurücknahme der Betätigung des Bremspedals 1 strömt Hydraulikfluid von dem ersten Druckraum 7' der Simulationseinrichtung 7 über die zweite Drossel 11 in den Hauptbremszylinder 2 zurück. Hierbei ist der Strömungsquerschnitt der mit dem Sperrventil 12 in Reihe geschalteten zweiten Drossel 11 größer als der Strömungsquerschnitt der mit dem Sperrventil 13 in Reihe geschalteten ersten Drossel 10 eingestellt. Damit wird erreicht, daß sich bei Betätigung des Bremspedals 1 eine stärkere Bedämpfung als bei Zurücknahme der Betätigung des Bremspedals 1 ergibt.

Bei der Ausführungsform nach Fig. 3 ist gegenüber der Ausführungsform nach Fig. 1 den Drosseln 10, 11 eine weitere Drossel 15 parallel geschaltet, wobei dieser dritten Drossel 15 ein Differenzdruckventil 14 mit geschlossener Grundstellung in Reihe geschaltet ist. Hierbei strömt bei einer Betätigung des Bremspedals 1 Hydraulikfluid von dem Hauptbremszylinder 2 über die Drossel 10 in die Simulationseinrichtung 7. Sobald die Druckdifferenz zwischen dem Hauptbremszylinder 2 und der Simulationseinrichtung 7 eine voreingestellte Öffnungsdruckdifferenz überschreitet, strömt die Hydraulikfluid von dem Hauptbremszylinder 2 über die zweite und dritte Drossel 10, 15 in die Simulationseinrichtung 7. Wird die Betätigung des Bremspedals 1 zurückgenommen, so strömt Hydraulikfluid von der Simulationseinrichtung 7 über die erste und zweite Drossel 10, 11 in den Hauptbremszylinder 2 zurück.

Da die Druckdifferenz zwischen dem Hauptbremszylinder 2 und der Simulationseinrichtung 7 mit der auf das Bremspedal 1 ausgeübten Betätigungskraft in Beziehung steht, erfolgt hierbei die Einstellung der Dämpfungscharakteristik in Abhängigkeit von der Betätigungskraft. Die Druckdifferenz zwischen dem Hauptbremszylinder 2 und der Simulationseinrichtung 7 hängt bei in seiner geschlossenen Grundstellung befindlichem Differenzdruckventil 14 von dem Volumenstrom durch die erste Drossel 10 ab. Außerdem steht der Volumenstrom mit der Betätigungsgeschwindigkeit des Bremspedal 1 in Beziehung. Daher ist die Einstellung der Dämpfungscharakteristik auch von der Betätigungsgeschwindigkeit abhängig. Insgesamt läßt sich somit die Dämpfungscharakteristik bei Betätigung des Bremspedals 1 durch Einstellung der Öffnungsdruckdifferenz des Differenzdruckventils 14 sowie durch Bemessung des Strömungsquerschnittes der ersten Drossel 10 in Abhängigkeit von der Betätigungskraft sowie der Betätigungsgeschwindigkeit des Bremspedals 1 zu exakten Simulation der Pedalcharakteristik einstellen.

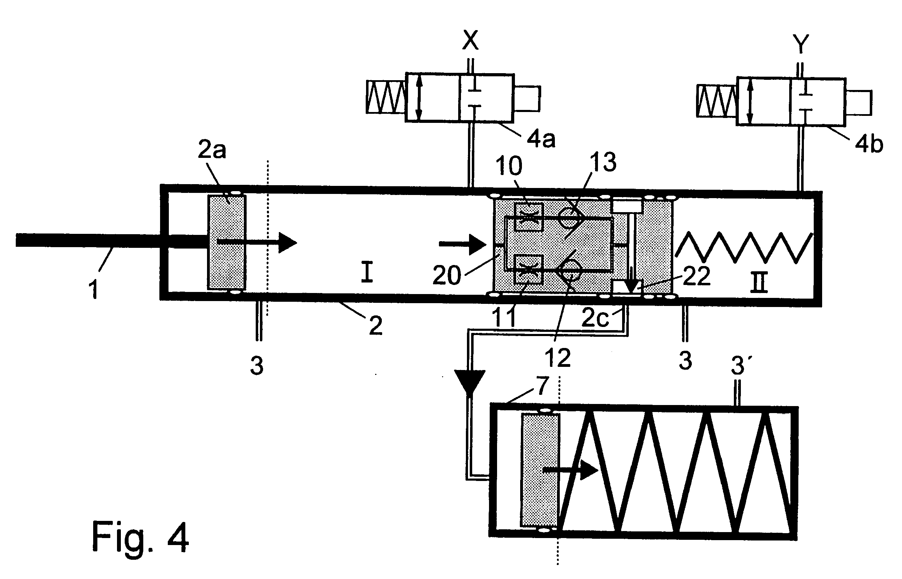

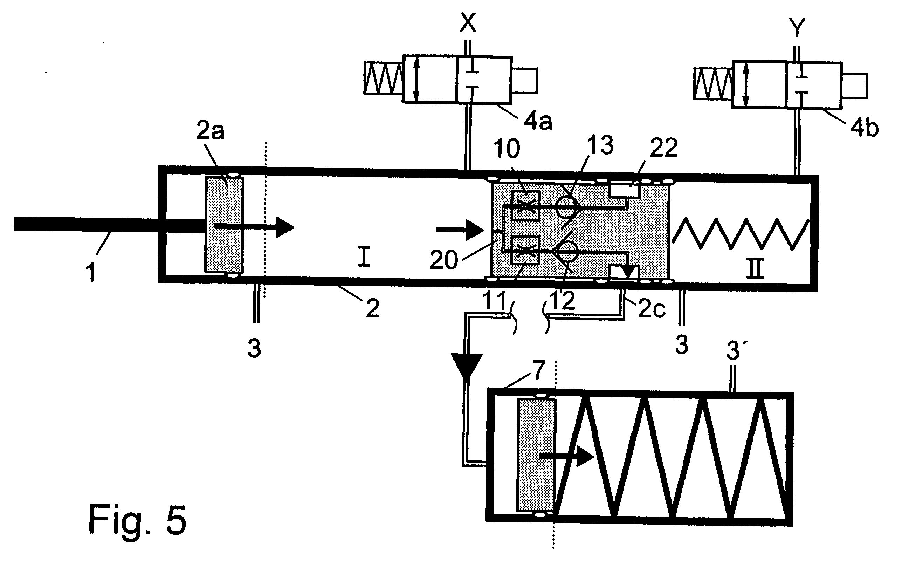

In den Fig. 4 und 5 ist schematisch eine weitere Ausführungsform gezeigt, bei der die Simulationseinrichtung 7 in den Strömungsweg des Kanals 20 (entweder im Längspfad - Fig. 4 oder in den Querpfaden - Fig. 5) integriert ist.

## Patentansprüche

1. Betätigungseinheit für eine elektronisch gesteuerte hydraulische Fahrzeugbremsanlage, mit
- einem Hauptbremszylinder (2), in dem ein durch ein Betätigungsglied (1) verschiebbarer erster Kolben (2a) angeordnet ist,
- einem ersten Bremskreis (X), der durch eine Ventilanordnung (4a) in einer Grundstellung (4.1) mit dem Hauptbremszylinder (2) verbindbar oder in einer Betätigungsstellung (4.2) von diesem trennbar ist, und
- einer mit einer Hydraulikkammer (I) des Hauptbremszylinders (2) verbindbaren Einrichtung (7) zur Simulation des Bremspedalverhaltens, **dadurch gekennzeichnet, daß**
-- in dem Hauptbremszylinder (2) ein zweiter Kolben (2b) verschiebbar angeordnet ist und, daß
-- ein Verschieben eines Kolbens (2a, 2b) ein Verschieben des anderen Kolbens (2b; 2a) verursacht, wobei durch das Ver schieben die Einrichtung (7) zur Simulation des Bremspedal, verhaltens wirksam oder unwirksam geschaltet wird.

2. Betätigungseinheit für eine elektronisch gesteuerte hydraulische Fahrzeugbremsanlage nach Anspruch 1, **dadurch gekennzeichnet, daß**
- die beiden Kolben (2a; 2b) miteinander und mit der Wand des Hauptbremszylinders (2) eine erste und eine zweite Hydraulikkammer (I, II) begrenzen, wobei in diesen Hydraulikkammern Hydraulikfluid aufgenommen ist.

3. Betätigungseinheit für eine elektronisch gesteuerte hydraulische Fahrzeugbremsanlage nach Anspruch 1 oder 2, **dadurch gekennzeichnet, daß**
- der zweite Kolben (2b) einen von einer der Hydraulikkammern (I) zu einem seitlichen Auslaß (22) führenden Kanal (20) aufweist, wobei der Fluidanschluß (2c) zu der Einrichtung (7) zur Simulation des Bremspedalverhaltens so angeordnet ist, daß er in Abhängigkeit von der Stellung des zweiten Kolbens (2b) mit dem Auslaß (22) des Kanals (20) fluchtet, wenn der Bremskreis (X) durch die erste Ventilanordnung (4a) von dem Hauptbremszylinder (2) getrennt ist.

4. Betätigungseinheit für eine elektronisch gesteuerte hydraulische Fahrzeugbremsanlage nach einem der vorhergehenden Ansprüche, **dadurch gekennzeichnet, daß**
- die Einrichtung (7) zur Simulation des Bremspedalverhaltens eine zur Wirkung gegen den Hydraulikdruck aus dem Hauptbremszylinder (2) eingerichtete Federanordnung (7b) aufweist, und ihr eine Charakteristik-Modelliereinrichtung (A ... B) zugeordnet ist.

5. Betätigungseinheit für eine elektronisch gesteuerte hydraulische Fahrzeugbremsanlage nach einem der vorhergehenden Ansprüche, **dadurch gekennzeichnet, daß**
- die Charakteristik-Modelliereinrichtung (A ... B) in der Verbindung zwischen dem Hauptbremszylinder (2) und der Einrichtung (7) zur Simulation des Bremspedalverhaltens angeordnet ist.

6. Betätigungseinheit für eine elektronisch gesteuerte hydraulische Fahrzeugbremsanlage nach einem der vorhergehenden Ansprüche, **dadurch gekennzeichnet, daß**
- die Charakteristik-Modelliereinrichtung (A ... B) in einem der Kolben (2b) in dem Hauptbremszylinder (2), vorzugsweise im Strömungsweg zwischen einer der Hydraulikkammern (I; II) und dem seitlichen Auslaß (20) des zweiten Kolbens (2b) angeordnet ist.

7. Betätigungseinheit für eine elektronisch gesteuerte hydraulische Fahrzeugbremsanlage nach einem der vorhergehenden Ansprüche, **dadurch gekennzeichnet, daß**
- die Charakteristik-Modelliereinrichtung (A ... B) in der Verbindung zwischen der Einrichtung zur Simulation des Bremspedalverhaltens (7) und einem Hydraulikreservoir (3; 3') angeordnet ist.

8. Betätigungseinheit für eine elektronisch gesteuerte hydraulische Fahrzeugbremsanlage nach einem der vorhergehenden Ansprüche, **dadurch gekennzeichnet, daß**
- die Einrichtung (7) zur Simulation des Bremspedalverhaltens durch eine Zylinder/Kolbenanordnung gebildet ist, bei der ein Kolben (7a) durch die Federanordnung (7b) belastet ist.

## Claims

1. Actuator unit for an electronically controlled hydraulic vehicle brake system, comprising
- a master brake cylinder (2) in which a first piston (2a) displaceable by an actuator (1) is disposed,
- a first brake circuit (X) which can be connected in a basic position (4.1) to the master brake cylinder (2) or separated from the latter in an actuating position (4.2) by a valve arrangement (4a), and
- a device (7) which can be connected to a hydraulic chamber (I) of the master brake cylinder (2) to simulate the brake pedal behaviour, **characterised in that**
-- a second piston (2b) is disposed in a displaceable manner in the master brake cylinder (2) and that
-- a displacement of one piston (2a, 2b) causes the displacement of the other piston (2b; 2a), wherein the device (7) for simulating the brake pedal behaviour is switched to an active or inactive mode through the displacement.

2. Actuator unit for an electronically controlled hydraulic vehicle brake system according to Claim 1, **characterised in that**
- the two pistons (2a; 2b) define with one another and with the wall of the master brake cylinder (2) a first and a second hydraulic chamber (I, II), hydraulic fluid being held in these hydraulic chambers.

3. Actuator unit for an electronically controlled hydraulic vehicle brake system according to Claim 1 or 2, **characterised in that**
- the second piston (2b) comprises a duct (20) leading from one of the hydraulic chambers (I) to a lateral outlet (22), the fluid connection (2c) to the device (7) for simulating the brake pedal behaviour being disposed such that, depending on the position of the second piston (2b), it is aligned with the outlet (22) of the duct (20) when the brake circuit (X) is separated from the master brake cylinder (2) by the first valve arrangement (4a).

4. Actuator unit for an electronically controlled hydraulic vehicle brake system according to any one of the preceding claims, **characterised in that**
- the device (7) for simulating the brake pedal behaviour comprises a spring arrangement (7b) which is set up to act against the hydraulic pressure from the master brake cylinder (2), and that a characteristic modelling device (A ... B) is associated with this device.

5. Actuator unit for an electronically controlled hydraulic vehicle brake system according to any one of the preceding claims, **characterised in that**
- the characteristic modelling device (A ... B) is disposed in the connection between the master brake cylinder (2) and the device (7) for simulating the brake pedal behaviour.

6. Actuator unit for an electronically controlled hydraulic vehicle brake system according to any one of the preceding claims, **characterised in that**
- the characteristic modelling device (A ... B) is disposed in one of the pistons (2b) in the master brake cylinder (2), preferably in the flow path between one of the hydraulic chambers (I, II) and the lateral outlet (20) of the second piston (2b).

7. Actuator unit for an electronically controlled hydraulic vehicle brake system according to any one of the preceding claims, **characterised in that**
- the characteristic modelling device (A ... B) is disposed in the connection between the device (7) for simulating the brake pedal behaviour and a hydraulic reservoir (3; 3').

8. Actuator unit for an electronically controlled hydraulic vehicle brake system according to any one of the preceding claims, **characterised in that**
- the device (7) for simulating the brake pedal behaviour is formed by a cylinder/piston arrangement, in which a piston (7a) is loaded by the spring arrangement (7b).

## Revendications

1. Unité d'actionnement pour une installation de freinage de véhicule hydraulique, à commande électronique, comprenant :
- un maître-cylindre de frein (2), dans lequel est disposé un premier piston (2a) pouvant coulisser à travers un élément d'actionnement (1),
- un premier circuit de freinage (X), qui peut être relié par un agencement de vanne (4a) dans une position de base (4.1) au maître-cylindre de frein (2) ou peut être séparé de ce cylindre dans une position d'actionnement (4.2), et
- un dispositif (7) pouvant être relié à une chambre hydraulique (I) du maître-cylindre de frein (2) pour la simulation du comportement de la pédale de frein,
**caractérisée en ce que**
- un second piston (2b) est disposé de façon coulissante dans le maître-cylindre de frein (2) et **en ce que**
- un déplacement d'un piston (2a, 2b) entraîne un déplacement de l'autre piston (2b ; 2a), le dispositif (7) pour la simulation du comportement de la pédale de frein étant commuté de façon active ou inactive par le déplacement.

2. Unité d'actionnement pour une installation de freinage de véhicule hydraulique, à commande électronique, selon la revendication 1, **caractérisée en ce que**
- les deux pistons (2a ; 2b) délimitent l'un avec l'autre et avec la paroi du maître-cylindre de frein (2) une première et une seconde chambres hydrauliques (I, II), du liquide hydraulique étant réceptionné dans ses chambres hydrauliques.

3. Unité d'actionnement pour une installation de freinage de véhicule hydraulique, à commande électronique, selon la revendication 1 ou 2, **caractérisée en ce que**
- le second piston (2b) présente un conduit (20) allant de l'une des chambres hydrauliques (I) à une sortie (22) latérale, le branchement hydraulique (2c) pour le dispositif (7) destiné à la simulation du comportement de la pédale de frein étant disposé de telle sorte qu'il est aligné en fonction de la position du second piston (2b) avec la sortie (22) du conduit (20) lorsque le circuit de freinage (X) est séparé du maître-cylindre de frein (2) par le premier agencement de vanne (4a).

4. Unité d'actionnement pour une installation de freinage de véhicule hydraulique, à commande électronique, selon l'une quelconque des revendications précédentes, **caractérisée en ce que**
- le dispositif (7) pour la simulation du comportement de la pédale de frein présente un dispositif à ressort (7b) aménagé pour agir contre la pression hydraulique provenant du maître-cylindre de frein (2) et un dispositif de modélisation de caractéristique (A ... B) lui est attribué.

5. Unité d'actionnement pour une installation de freinage de véhicule hydraulique, à commande électronique, selon l'une quelconque des revendications précédentes, **caractérisée en ce que**
- le dispositif de modélisation de caractéristique (A ... B) est disposé dans la liaison entre le maître-cylindre de frein (2) et le dispositif (7) pour la simulation du comportement de la pédale de frein.

6. Unité d'actionnement pour une installation de freinage de véhicule hydraulique, à commande électronique, selon l'une quelconque des revendications précédentes, **caractérisée en ce que**
- le dispositif de modélisation de caractéristique (A ... B) est disposé dans l'un des pistons (2b) dans le maître-cylindre de frein (2), de préférence dans le chemin d'écoulement entre l'une des chambres hydrauliques (I ; II) et la sortie (20) latérale du second piston (2b).

7. Unité d'actionnement pour une installation de freinage de véhicule hydraulique, à commande électronique, selon l'une quelconque des revendications précédentes, **caractérisée en ce que**
- le dispositif de modélisation de caractéristique (A ... B) est disposé dans la liaison entre le dispositif (7) pour la simulation du comportement de la pédale de frein et un réservoir hydraulique (3 ; 3').

8. Unité d'actionnement pour une installation de freinage de véhicule hydraulique, à commande électronique, selon l'une quelconque des revendications précédentes, **caractérisée en ce que**
- le dispositif (7) pour la simulation du comportement de la pédale de frein est formé par un agencement cylindre/piston, sur lequel un piston (7a) est sollicité par l'agencement de ressort (7b).
